(19) Europäisches Patentamt
European Patent Office
Office européen des brevets

(11) Veröffentlichungsnummer: **0 350 451**
**A2**

# (12) EUROPÄISCHE PATENTANMELDUNG

(21) Anmeldenummer: **89810500.2**

(22) Anmeldetag: **30.06.89**

(51) Int. Cl.5: **B 05 D 1/20**
G 02 F 1/17

(30) Priorität: **08.07.88 CH 2617/88**

(43) Veröffentlichungstag der Anmeldung:
**10.01.90 Patentblatt 90/02**

(84) Benannte Vertragsstaaten:
**CH DE FR GB IT LI NL**

(71) Anmelder: **CIBA-GEIGY AG**
**Klybeckstrasse 141**
**CH-4002 Basel (CH)**

(72) Erfinder: **Wegmann, Alex, Dr.**
**Binningerstrasse 38**
**CH-4123 Allschwil (CH)**

**Tieke, Bernd, Dr.**
**Route Bel-Air 22**
**CH-1723 Marly (CH)**

**Hilti, Bruno, Dr.**
**Marschalkenstrasse 27**
**CH-4054 Basel (CH)**

## (54) Verfahren zur Herstellung von elektroaktiven Langmuir-Blodgett Schichtsystemen.

(57) Beschrieben wird ein Verfahren zur Herstellung von Langmuir-Blodgett Schichtsystemen. Das Verfahren ist dadurch gekennzeichnet, dass die Uebertragung einer Monoschicht auf einen festen Träger mit elektrisch leitfähiger Oberfläche unter Anlegen eines elektrischen Potentials erfolgt, wobei ein in der Monoschicht enthaltenes elektroaktives Molekül oxidiert oder reduziert wird. Die erhaltenen Schichtsysteme lassen sich beispielsweise als elektrisch leitfähige Schichten oder als Sensoren einsetzen.

EP 0 350 451 A2

**Beschreibung**

**Verfahren zur Herstellung von elektroaktiven Langmuir-Blodgett Schichtsystemen**

Die vorliegende Erfindung betrifft Verfahren zur elektrochemischen Herstellung von elektroaktiven Langmuir-Blodgett Schichtsystemen (LB-Systemen) sowie die damit erhältlichen Schichtsysteme.

Mit dem Verfahren lassen sich elektroaktive dünne Schichten herstellen, die beispielsweise auf dem Gebiet der Elektronik oder als Sensoren eingesetzt werden können.

Elektrisch leitfähige LB-Systeme sind an sich bekannt. So beschreiben beispielsweise A. Ruaudel-Teixier et al. in Mol. Cryst. Liq. Cryst. 120, 319-323 (1985) ein LB-System aus einem amphiphilen Pyridinium-TCNQ-Salz, das durch Dotieren mit Ioddampf in eine elektrisch leitfähige Form übergeführt wird.

Aus der DE-A-3,615,832 sind LB-Schichtsysteme aus ausgewählten metallomakrocyclischen Polymeren bekannt. Es wird dort unter anderem vorgeschlagen, die elektrische Leitfähigkeit dieser Schichten durch partielle Oxidation, beispielsweise durch Behandlung mit Iod-Dampf oder durch elektrochemische Oxidation, zu erhöhen. Diese Schichten sind elektroaktiv, d.h. es bilden sich unter Anlegen eines elektrischen Potentials bestimmte Redox-Zustände aus.

Es wurde jetzt ein Verfahren zur Herstellung von LB-Schichtsystemen gefunden, das durch eine elektrochemische Behandlung während des Herstellungsprozesses des LB-Schichtsystems gekennzeichnet ist. Bei dem erfindungsgemässen Verfahren werden die Dotierung und das Aufziehen der Schicht in einem Schritt durchgeführt.

Die durch dieses Verfahren erzeugten LB-Schichtsysteme zeichnen sich gegenüber den durch nachträgliche Behandlung mit Dotierungsmitteln oder durch nachträgliche elektrochemische Oxidation erhältlichen LB-Systemen durch einen verbesserten Ordnungszustand der Schichten aus.

Mit dem neuen Verfahren ist es also möglich, bereits bei der Herstellung eine Schichtstruktur mit elektrischer Leitfähigkeit zu erhalten. Dabei ist es als besonders überraschend anzusehen, dass die während des Uebertragungsschrittes erzeugten ionischen Spezies sich unzersetzt auf feste Träger aufbringen lassen.

Als weiterer Vorteil des erfindungsgemässen Verfahrens ist anzusehen, dass eine grosse Anzahl verschiedener Gegenionen in das Schichtsystem eingebaut werden kann. Damit wird die Herstellung von Schichten möglich, die mit konventionellen Verfahren nicht zugänglich sind.

Ausserdem kann bei dem neuen Herstellungsverfahren auf umweltbelastende und korrosive Dotierungsmittel, beispielsweise Chlor- oder Ioddampf, verzichtet werden.

Die vorliegende Erfindung betrifft ein Verfahren zur Herstellung von Langmuir-Blodgett Schichtsystemen (LB-Systemen) umfassend die Schritte

i) Herstellung einer monomolekularen Schicht aus einer elektroaktiven Verbindung enthaltend ein cyclisches konjugiertes π-System, das sich elektrochemisch oxidieren oder reduzieren lässt oder aus einem Gemisch dieser Verbindung in Kombination mit weiteren zur Stabilisierung von monomolekularen Schichten befähigten amphiphilen Verbindungen,

ii) Uebertragung dieser Schicht von einer Subphase, die einen Elektrolyten enthält und in die eine Gegenelektrode eintaucht, auf einen festen Träger mit elektrisch leitfähiger Oberfläche durch Tauchen besagten Trägers durch die Schicht, wobei die Uebertragung der Schicht auf den als Anode oder als Kathode geschalteten Träger erfolgt, und wobei das angelegte Potential so gewählt wird, dass sich ein Salz aus besagter Verbindung und Gegenionen der Subphase bildet.

Unter einer "elektroaktiven Verbindung enthaltend ein cyclisches konjugiertes π-System, das sich elektrochemisch oxidieren oder reduzieren lässt" versteht man im Rahmen dieser Beschreibung irgendeine monofilmbildende Substanz mit einem cyclischen konjugierten π-System, die in ein LB-Schichtsystem eingebaut elektrochemisch in einen stabilen positiv bzw. negativ geladenen Zustand überführt werden kann, wobei der oxidierte bzw. reduzierte Zustand beispielsweise ein Radikalkation bzw. -anion oder ein Dikation oder Dianion ist.

Der Begriff "cyclisches konjugiertes π-System" umfasst aromatische und nichtaromatische π-Systeme, sowie carbocyclische oder heterocyclische π-Systeme.

Beispiele für geeignete Verbindungsklassen sind monofilmbildende Annulene; monofilmbildende carbocyclisch-aromatische Kohlenwasserstoffe, wie amphiphile Pyren- oder Perylenderivate; monofilmbildende heterocyclisch-aromatische Kohlenwasserstoffe, wie amphiphile Carbazol- und Pyrrolderivate, oder Tetrathiotetracen- oder Tetraselenotetracenderivate, sowie Tetrathiafulvalen-, Tetraselenofulvalen-, Porphyrin-, Phthalocyanin- oder Tetraazaannulenderivate.

Als Gegenionen zum Einbau zusammen mit den kationischen Formen der elektroaktiven Verbindung in Schichtsysteme eignen sich praktisch alle anorganischen oder organischen Anionen.

Beispiele für anorganische Anionen sind ($ClO_4^-$, $BF_4^-$, $PF_6^-$, $AsF_6^-$, $SbF_6^-$, $SbCl_4^-$, $SbCl_6^-$, $F^-$, $Cl^-$, $Br^-$, $Br_3^-$, $I^-$ oder $I_3^-$.

Beispiele für organische Anionen sind Tetracyanochinodimethan⁻, Tetracyanaethylen⁻, Alkyl-, Aryl-, Alkaryl-, Aralkyl-, Fluoralkyl- oder Fluoralkarylsulfat, -sulfonat, -phosphat, -phosphonat oder Heteroarylsulfonate, wie Pyrrolopyrroldisulfonat; oder polymere Anionen, wie Polyvinylsulfonat, Polystyrolsulfonat, Polyanetholsulfonat [sulfoniertes Poly(p-methoxy-β-methylstyrol)] oder Dextransulfonat.

Als Gegenionen zum Einbau zusammen mit den anionischen Formen der elektroaktiven Verbindung in Schichtsysteme eignen sich praktisch alle anorganischen oder organischen Kationen.

Beispiele dafür sind Metallkationen, wie $Li^+$, $Na^+$, $K^+$, oder $Ag^+$ oder organische Kationen, wie Alkylammonium-, Alkylsulfonium-, Alkylphosphonium- oder S-Benzylthiuronium Ionen.

Zur Herstellung von monomolekularen Schichten an der Wasser/Luft Grenzfläche trägt man in an sich bekannter Weise eine geringe Menge einer Lösung der monofilmbildenden, elektroaktiven Verbindung in einem vorzugsweise niedrigsiedenden und nicht mit Wasser mischbaren Lösungsmittel auf eine Wasseroberfläche auf, lässt das Lösungsmittel verdampfen und komprimiert den entstandenen Film, so dass eine stabile monomolekulare Schicht auf der Wasseroberfläche entsteht. Die Subphase, auf der die monomolekulare Schicht ausgebildet wird, besteht in der Regel aus mehrfach destilliertem oder deionisiertem und filtriertem Wasser, dem noch ein Leitsalz beigemischt ist, dessen Anionen oder Kationen als Gegenionen in das Multischichtsystem eingebaut werden. Das Leitsalz wird in der Regel in Form der jeweiligen Protonensäure oder eines ihrer Salze, bevozugt der Alkalimetallsalze, der Subphase zugegeben. Die Konzentration dieses Leitsalzes muss ausreichend sein, um eine vernünftige Geschwindigkeit des Einbaus in die LB-Multischicht zu gewährleisten. In der Regel sind Konzentrationen von $10^{-5}$ bis $10^{-3}$ Mol pro Liter ausreichend. Als obere Grenze ist die Sättigungskonzentration des Leitsalzes im jeweiligen Elektrolyten anzusehen.

Die Stabilität der Filme lässt sich bekanntermassen durch Wahl der experimentellen Parameter beeinflussen. So kann man beispielsweise relativ labile Filme durch Kühlen der Subphase stabilisieren oder man verwendet Verbindungen, die monomolekulare Filme zu stabilisieren vermögen.

Beispiele für solche Verbindungen sind langkettige Carbonsäuren, wie Myristinsäure, Palmitinsäure, Stearinsäure, Arachinsäure oder Behensäure oder deren Ester, insbesondere die Methylester dieser Säuren; langkettige primäre Amine, wie Hexadecyl-, Octadecyl- oder Eicosylamin; langkettige Alkohole, wie Hexadecanol, n-Octadecanol oder Eicosanol; langkettige aliphatische Kohlenwasserstoffe, wie Hexadecan, Octadecan oder Eicosan; oder Steroide und Steroidderivate, wie Cholesterol. Neben den gesättigten Derivaten können auch ethylenisch- oder acetylenischungesättigte Derivate eingesetzt werden. Beispiele dafür sind ω-Tricosensäure, deren Ester, davon abgeleitete Amine oder Alkohole.

Die monofilmbildenden, elektroaktiven Verbindungen sind in der Regel zu wenigstens 1 Mol.%, bezogen auf die Gesamtmischung, in solchen Mischfilmen vorhanden.

Vorzugsweise enthalten die Filme 1-95 Mol.%, insbesondere 20-75 Mol.%, an monofilmbildenden, elektroaktiven Verbindungen in Kombination mit weiteren, zur Stabilisierung von monomolekularen Filmen befähigten, amphiphilen Verbindungen.

Monomolekulare Filme aus filmbildenden Substanzen oder Gemischen solcher Substanzen lassen sich nach dem LB-Verfahren gut von der Wasseroberfläche auf feste Träger übertragen. Dazu taucht man in an sich bekannter Weise einen festen Träger durch einen komprimierten, monomolekularen Film auf einer Wasseroberfläche und überträgt dadurch besagten komprimierten Film auf den Träger.

Durch mehrmaliges Ein- und/oder Austauchen lassen sich auf diese Weise Mehrschichtsysteme herstellen.

Zum Uebertragen der Monoschicht unter Anlegen eines elektrischen Potentials wird ein fester Träger mit elektrisch leitfähiger Oberfläche unter Anlegen einer Gleichspannung als Kathode oder Anode geschaltet und eine Gegenelektrode, beispielsweise ein Gold- oder Platindraht, in die Subphase getaucht. Anschliessend wird die Uebertragung der Monoschicht durch Tauchen der Trägerelektrode durchgeführt. Das Potential wird so gewählt, dass es ausreicht, um die Oxidation oder die Reduktion der elektroaktiven Verbindung durchzuführen, ohne wesentliche Aenderungen in der Subphase zu erzeugen, beispielsweise durch Abbau von Bestandteilen der Subphase. Die im Einzelfall nötige Spannung kann vom Fachmann anhand von spektroskopischen Methoden ermittelt werden, da die Oxidation oder die Reduktion der Verbindung zu einer Veränderung des Absorptionsspektrums besagter Verbindung führt.

Die Uebertragung wird zweckmässig bei einer Temperatur von 1 bis 30°C durchgeführt. Es können aber auch davon abweichende Uebertragungstemperaturen vorkommen. Auswahlkriterium für die Uebertragungstemperatur ist in erster Linie die Stabilität des Monofilms auf der Wasseroberfläche.

Der Monofilm auf der Wasseroberfläche kann nach jedem Tauchvorgang ausgetauscht werden, so dass unterschiedliche Folgen von Schichten auf dem Träger herstellbar sind.

Die nach dem LB-Verfahren hergestellten Multischichten können also aus unmittelbar aufeinander folgenden Schichten eines Materials oder aus alternierenden Schichten verschiedener schichtbildender Materialien bestehen.

Die Verfahrensweisen zur Herstellung von Multischichten ohne Anlegen eines Potentials und die verschiedenen Typen von Multischichten sind dem Fachmann auf dem Gebiet der LB-Systeme an sich bekannt und beispielsweise in "Techniques Of Chemistry, Physical Methods Of Chemistry, Vol. I, Part 3B, S. 666-71; Editor: A. Weissberger, P. Rossiter" beschrieben.

Als feste Träger für das LB-Verfahren kommen unterschiedlichste Substrate mit mikroskopisch planarer und elektrisch leitfähiger Oberfläche in Frage.

Beispiele dafür sind Metalle, wie Aluminium, Kupfer, Silber oder Gold; Halbleiter, wie Germanium, Silizium oder GaAs; anorganische Materialien, die mit leitfähigen Ueberzügen versehen sind, wie Glas oder Quarz, die beispielsweise mit Metallschichten oder mit Halbleiterschichten, beispielsweise mit Indium-Zinn-Oxid (ITO), versehen sind; oder Kunststoffe, wie Teflon®, Polyethylen, Polymethylmethacrylat, Polystyrol oder Polyester, die mit elektrisch leitfähigen Ueberzügen, beispielsweise mit den oben erwähnten Materialien, versehen sind.

Man kann auch hydrophobierte Träger mit elektrisch leitfähiger Oberfläche benutzen, beispielsweise mit elektrisch leitfähigen Ueberzügen versehenes Glas oder Quarz, das mit Trichlormethylsilan, Dichlordimethylsilan oder Trichloroctadecylsilan vorbehandelt wurde.

Vorzugsweise wird das erfindungsgemässe Verfahren mit elektroaktiven Verbindungen durchgeführt, die in der oxidierten Form als Radikalkation oder Dikation und in der reduzierten Form in neutraler Form vorliegen.

Dazu zählen besonders bevorzugt Verbindungen der Formel I

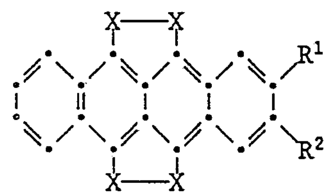

(I),

worin X S oder Se ist, $R^1$ $C_1$-$C_{30}$-Alkyl, $-CF_3$, $-O-R^3$, $-S-R^3$ oder $-CO-O-R^3$ bedeutet, $R^2$ Wasserstoff, $C_1$-$C_{30}$-Alkyl, $-CF_3$, $-O-R^3$, $-S-R^3$ oder $-CO-O-R^3$ ist, und $R^3$ $C_1$-$C_{30}$-Alkyl oder $C_1$-$C_{30}$-Teil- oder Perfluoralkyl ist.

Von diesen Verbindungen der Formel I setzt man bevorzugt die Typen ein, worin X S ist, $R^1$ $-O-R^3$ ist und $R^2$ Wasserstoff bedeutet; oder worin X S ist, $R^1$ $-CF_3$ bedeutet und $R^2$ Wasserstoff ist.

Weiterhin zählen dazu besonders bevorzugt Verbindungen der Formel II

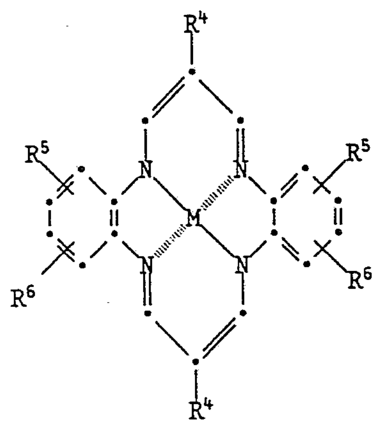

(II),

worin $R^4$ Wasserstoff, $C_1$-$C_{30}$-Alkyl, unsubstituiertes oder durch $C_1$-$C_{12}$-Alkyl, $C_1$-$C_{12}$-Alkoxy oder $C_1$-$C_{12}$-Alkylthio substituiertes Phenyl oder Naphthyl ist, $R^5$ $C_4$-$C_{30}$-Alkyl, $C_4$-$C_{30}$-Alkoxy oder $C_4$-$C_{30}$-Alkylthio bedeuten, $R^6$ Wasserstoff darstellt oder die gleiche Bedeutung wie $R^5$ aufweist und M für ein zweiwertiges Metallatom aus der Gruppe Kupfer, Nickel, Eisen, Kobalt, Palladium und Platin oder für zwei Wasserstoffatome steht.

Von diesen Verbindungen der Formel II setzt man bevorzugt diejenigen Typen ein, worin M Kupfer oder Nickel ist, $R^4$ $C_1$-$C_{30}$-Alkyl bedeutet, $R^5$ $C_{10}$-$C_{30}$-Alkylthio ist und $R^6$ Wasserstoff bedeutet.

Bedeuten irgendwelche Reste Alkyl, so kann es sich dabei um geradkettige oder verzweigte Reste handeln. Bevorzugt werden die geradkettigen Reste.

Ferner können Alkylreste eine oder mehrere trans-Doppelbindungen oder Dreifachbindungen aufweisen, die nicht in 1-Position stehen. Mehrere trans-Doppelbindungen oder Dreifachbindungen können isoliert oder miteinander konjugiert sein.

Spezifische Beispiele für Alkylreste sind, in Abhängigkeit von der C-Zahl bei den einzelnen Definitionen, Methyl, Ethyl, n-Propyl, Isopropyl, n-Butyl, Isobutyl, n-Pentyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Heneicosyl, n-Docosyl, n-Tetracosyl, n-Hexacosyl, n-Octacosyl und n-Triacontyl, oder Allyl, Propargyl, Octadec-9-trans-enyl oder Pentacosa-10,12-diinyl.

Im Falle von $R^3$ kann es sich auch um die entsprechenden Teil- oder Perfluoralkylderivate dieser Aufzählung handeln.

Bedeutet $R^4$ durch Alkyl-, Alkoxy- oder Alkylthiogruppen mit 1-12 C-Atomen substituiertes Phenyl oder Naphthyl, so kann dieses einfach oder mehrfach, bevorzugt einfach, in jeder möglichen Position substituiert sein, wobei die para-Position bevorzugt wird. Bei einer Mehrfachsubstitution können die Substituenten gleich oder verschieden sein.

Stellen $R^5$ und $R^6$ Alkoxy- oder Alkylthioreste mit 4-30 C-Atomen oder die Substituenten Phenyl oder Naphthyl des Restes $R^4$ $C_1$-$C_{12}$-Alkoxy oder -Alkylthio dar, so kann es sich dabei um geradkettige oder verzweigte Alkylgruppen handeln, wobei die geradkettigen bevorzugt sind.

Bevorzugte Metalle M sind Kupfer und Nickel.

Die Verbindungen der Formel I sind teilweise bekannt. So lassen sich die Verbindungen der Formel I, worin X S oder Se ist, $R^1$ $-CO-O-R^3$ bedeutet, $R^2$ Wasserstoff oder $-CO-O-R^3$ ist und $R^3$ die oben definierte Bedeutung besitzt, in Analogie zu dem in der DE-A-3,510,092 beschriebenen Verfahren herstellen.

Die Verbindungen der Formel I, worin X S ist, $R^1$ Alkyl, $-CF_3$, $-O-R^3$ oder $-S-R^3$ bedeutet, und $R^2$ Wasserstoff, Alkyl, $-CF_3$, $-O-R^3$ oder $-S-R^3$ ist, können nach folgendem Schema erhalten werden:

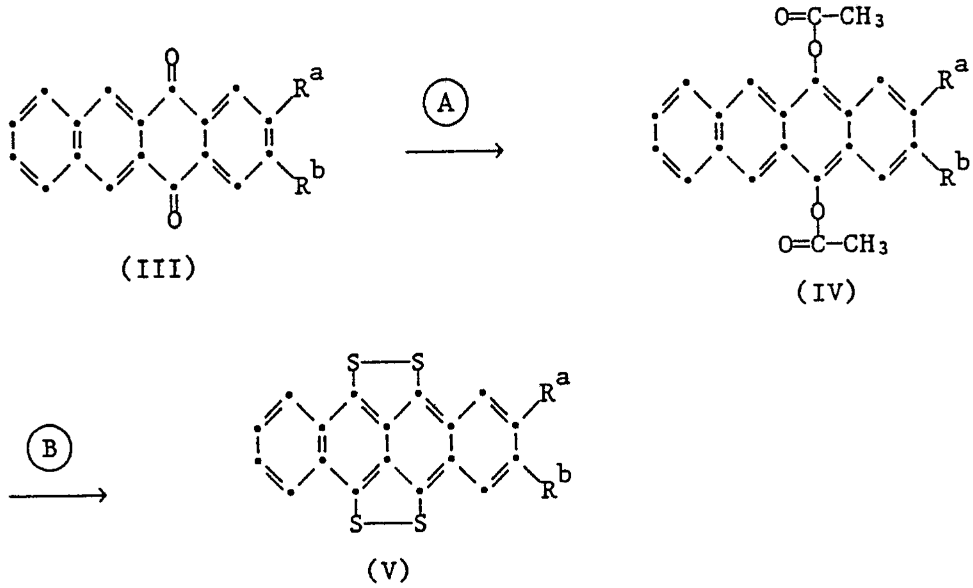

(III) (IV) (V)

dabei bedeuten $R^a$ Alkyl, $-CF_3$, $-O-R^3$ oder $-S-R^3$ und $R^b$ ist Wasserstoff, Alkyl, $-CF_3$, $-O-R^3$ oder $-S-R^3$.

Die reduktive Acetylierung ○ des Tetracenchinons III wird dabei beispielsweise durch Umsetzung mit Zn-Staub in Gegenwart von Acetan hydrid, Kaliumacetat und einem polaren, aprotischen Lösungsmittel, wie Essigsäureethylester, vorgenommen. Bei Reaktion ○ wird das Reduktionsmittel in der Regel in stöchiometrischem Ueberschuss, beispielsweise in Mengen von 2-4 Mol, bezogen auf ein Mol III, vorgelegt.

Die Umsetzung der Bis-acetoxyverbindung IV zum entsprechenden TTT-Derivat V (Reaktion ○) erfolgt zweckmässig durch Erhitzen der Verbindung IV mit Schwefel in Gegenwart eines sauren Katalysators, wie einer aromatischen Sulfonsäure, beispielsweise p-Toluolsulfonsäure.

Die Umsetzung wird in der Regel in einem inerten organischen Lösungsmittel für die Verbindung IV vorgenommen. Beispiele dafür sind halogenierte aromatische Kohlenwasserstoffe, wie Dichlorbenzol oder Trichlorbenzol.

Bei Reaktion ○ legt man den Schwefel in der Regel im Ueberschuss vor und die Reaktion wird vorzugsweise unter Rückfluss des jeweiligen Lösungsmittels durchgeführt.

Die Verbindungen der Formel I, worin X Se ist und $R^1$ bzw. $R^2$ die oben für $R^a$ bzw. $R^b$ definierten Bedeutungen besitzen, können nach folgendem Schema erhalten werden:

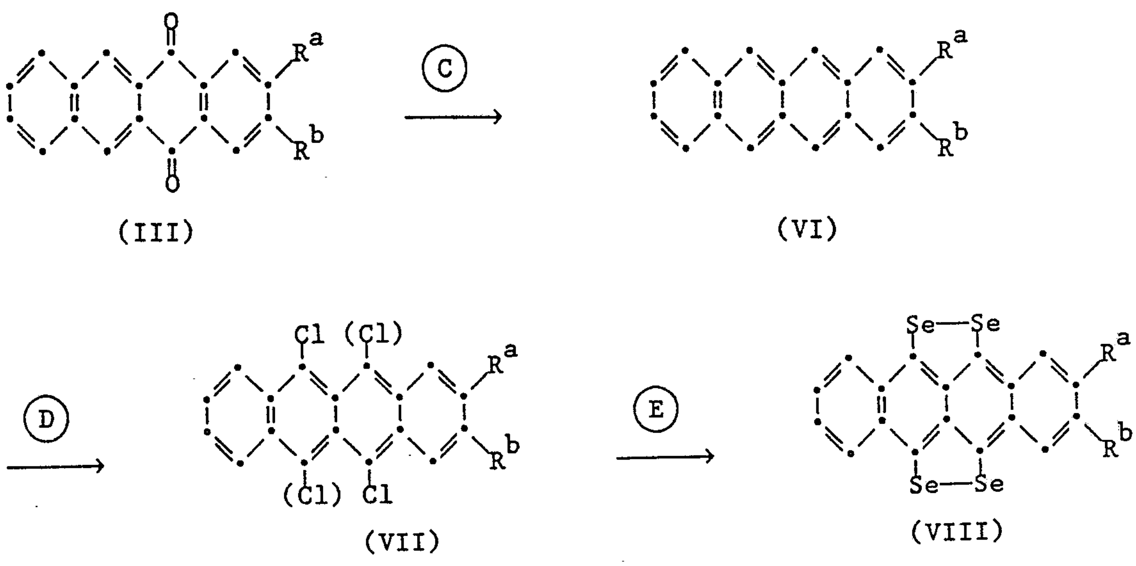

(III) (VI) (VII) (VIII)

Die Reduktion des Tetracenchinons III zum entsprechenden Tetracen VI (Reaktion ○) kann in an sich bekannter Weise durch Umsetzung der Verbindung III mit einem Ueberschuss eines Reduktionsmittels, beispielsweise Zn-Staub, erfolgen.

Die Umsetzung wird vorzugsweise in einem Gemisch aus Eisessig und Kaliumacetat durchgeführt. Die

Umsetzung des Tetracenderivats VI zum entsprechenden Dichlor- oder Tetrachlortetracen VII kann in an sich bekannter Weise durch Reaktion der Verbindung VI mit Sulfurylchlorid vorgenommen werden. Beispiele für solche Reaktionen an analogen Verbindungen findet man in der EP-A-109,360.

Die Umsetzung der Verbindung VII zum TSeT-Derivat VIII kann ebenfalls in Analogie zu bekannten Verfahren erfolgen. Dazu erhitzt man die Verbindung der Formel VII in Gegenwart von Selen. Beispiele für solche Umsetzungen sind ebenfalls in der EP-A-109,360 zu finden.

Die Verbindungen der Formel IIIa

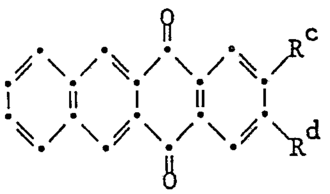 (IIIa),

worin $R^c$ -O-$R^3$ oder -S-$R^3$ ist, $R^d$ eine der für $R^c$ definierten Bedeutungen besitzt oder Wasserstoff ist und $R^3$ die oben definerte Bedeutung besitzt, können aus 2-Fluor- bzw. 2,3-Difluor-tetracen-5,12-dion durch Umsetzung mit $R^3$-OH oder $R^3$-SH in Gegenwart von Kaliumcarbonat erhalten werden. Die Umsetzung erfolgt im allgemeinen in einem polaren, aprotischen Lösungsmittel, beispielsweise in Dimethylsulfoxid.

Das Ausgangsmaterial 2-Fluor-tetracen-5,12-dion ist aus der EP-A-153,905 bekannt. Das 2,3-Difluorderivat kann in Analogie zum 2-Fluorderivat hergestellt werden, indem man 1,2-Difluorbenzol anstelle von Fluorbenzol verwendet.

Die Verbindungen der Formel IIIb

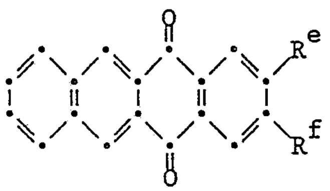 (IIIb),

worin $R^e$ Alkyl bedeutet und $R^f$ Wasserstoff oder Alkyl ist, können durch Friedel-Crafts-Acylierung von Alkyl- oder 1,2-Dialkylbenzolen mit Naphthalin-2,3-dicarbonsäureanhydrid und anschliessende Cyclisierung erhalten werden.

Beispiele für eine analoge Reaktionsfolge, bei der anstelle von Alkylbenzolen Fluorbenzol eingesetzt wird, findet man in der EP-A-109,360.

Die Verbindungen der Formel IIIc, worin $R^g$ Wasserstoff, Alkyl oder $-CF_3$ bedeutet, lassen sich durch Umsetzung von 1,2-Dibrombenzocyclobuten IX mit dem entsprechend substituierten 1,4-Naphthochinon X gemäss folgendem Schema erhalten:

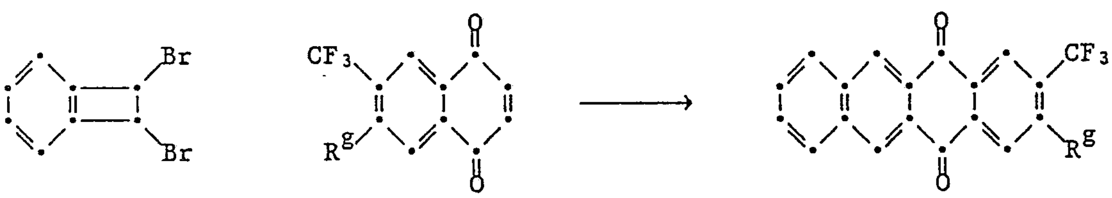

(IX) (X) (IIIc)

Diese Umsetzungen sind an sich aus Ann. Quim. Ser. C, 81(2), 133-8 (1985) bekannt. Dort wird auch die Herstellung der Verbindung IX beschrieben.

Die Verbindungen der Formel X lassen sich durch Diels-Alder Reaktion von 1,4-Benzochinon mit α-Pyronen der Formel XI erhalten

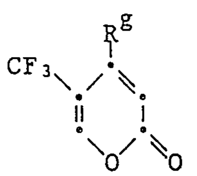 (XI);

dabei hat $R^g$ die oben definierte Bedeutung.

Die Verbindungen der Formel XI, worin $R^g$ Wasserstoff oder $-CF_3$ bedeutet, lassen sich in an sich bekannter

Weise durch Umsetzung von bekannten α-Pyron-5-carbonsäuren oder α-Pyron-4,5-dicarbonsäurediestern mit $SF_4/HF$ herstellen. Die α-Pyron-Ausgangsprodukte sind beispielsweise in der US-A-4,617,151 beschrieben.

Die Verbindungen der Formel XI, worin $R^9$ Alkyl ist, lassen sich in Analogie zum in der US-A-4,617,151 beschriebenen Verfahren durch Cyclisierung von Verbindungen der Formel XII in Gegenwart starker, wasserfreier Säuren, vorzugsweise wasserfreier Ameisensäure, und nachfolgende Ueberführung der $-COOR^7$ Gruppe mit $SF_4$ in $-CF_3$ erhalten

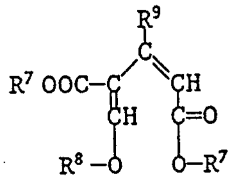

(XII);

darin bedeuten $R^7$ $R^8$ und $R^9$ Alkylreste.

Die Verbindungen der Formel XII lassen sich in Analogie zum aus der US-A-4,617,151 bekannten Verfahren durch Umsetzung von Ameisensäureestern $HCOOR^8$ in Gegenwart von $TiCl_4$ mit Verbindungen der Formel XIII erhalten

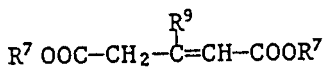

(XIII);

dabei besitzen $R^7$ und $R^9$ die weiter oben definierte Bedeutung. Die Verbindungen der Formel XIII können ausgehend von den an sich bekannten Ketodicarbonsäureestern der Formel XIIIa hergestellt werden

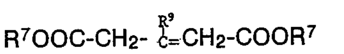 (XIIIa);

dabei besitzt $R^7$ die oben definierte Bedeutung.

Dazu setzt man eine Verbindung der Formel XIIIa mit einem Chlorierungsmittel, beispielsweise mit $PCl_3$, $PCl_5$ oder $SOCl_2$, zu dem entsprechenden 2-Chlorprop-1-en-1,3-dicarbonsäuredialkylester um und dehydrohalogeniert diesen in an sich bekannter Weise zu dem entsprechenden Allen-1,3-dicarbonsäuredialkylester.

Diese Allenverbindung wird anschliessend mit einem Reagenz $R^9Q$, worin Q ein Alkalimetall, beispielsweise Li, Na oder K, ist und $R^9$ einen Alkylrest darstellt in einem inerten Lösungsmittel in Gegenwart einer Kupfer-I-Verbindung, beispielsweise CuCN oder CuCl, umgesetzt und dann durch Hydrolyse zu einer Verbindung der Formel XIII umgesetzt. Die Reaktionstemperatur beträgt zweckmässig -100 bis -20°C.

Diese Umsetzungen werden vorzugsweise in einem organischen, inerten und polaren Lösungsmittel vorgenommen, beispielsweise in Ethern, wie Tetrahydrofuran; Sulfoxiden, wie Dimethylsulfoxid; Sulfonen, wie Tetramethylensulfon; N-substituierten Carbonsäureamiden oder Lactamen, wie Dimethylformamid oder N-Methylpyrrolidon.

Die Verbindungen der Formel II sind an sich bekannt und lassen sich beispielsweise nach den in den EP-A-162,804, -73,456 oder den DE-A-2,260,761 und -2,214,336 beschriebenen Verfahren herstellen.

Die mit den erfindungsgemässen Verfahren hergestellten Schichtsysteme lassen sich ganz allgemein als elektrische Leiter oder elektroaktive Bauteile einsetzen, beispielsweise als elektrochrome Anzeigen oder als Sensoren.

Die Erfindung betrifft daher auch die Verwendung der erfindungsgemäss erhältlichen Schichtsysteme für diese Zwecke.

Die folgenden Beispiele erläutern die Erfindung.

A) Herstellungsbeispiele

Beispiel 1: Herstellung von 2-n-Octyloxy-5,6,11,12-tetrathiotetracen (1)

1.1. Herstellung des Zwischenproduktes 2-n-Octyloxy-tetracen-5,12-dion

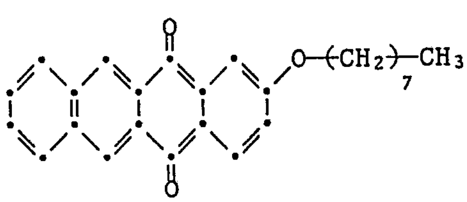

20 g (72,4 mMol) 2-Fluor-tetracen-5,12-dion, 94,3 g 1-Octanol, 30,01 g (217,2 mMol) wasserfreies Kaliumcarbonat und 200 ml DMSO werden während 20 Std. bei 100°C gerührt. Das Reaktionsgemisch wird

abgekühlt, mit Toluol/verd. Salzsäure versetzt, die organische Phase abgetrennt, zweimal mit Wasser gewaschen, mit Natriumsulfat getrocknet und eingedampft. Der Rückstand wird mit Pentan gewaschen und aus Cyclohexan umkristallisiert. Ausbeute: 22,9 g (82 %), Smp. 127-9°C.

Elementaranalyse für $C_{26}H_{26}O_3$ (MG 386,49):

| | | | |
|---|---|---|---|
| Berechnet: | C 80,80 | H 6,78 | O 12,42 %; |
| Gefunden: | C 80,68 | H 6,89 | O 12,57 %. |

1.2. Herstellung des Zwischenproduktes 2n-Octyloxy-5,12-bis(acetoxy)tetracen

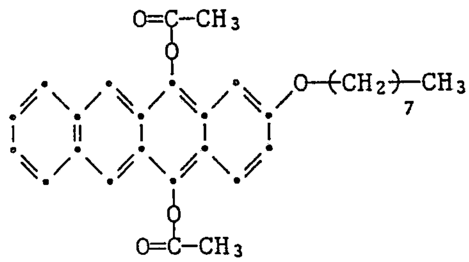

4 g (10,35 mMol) 2-n-Octyloxy-tetracen-5,12-dion aus Beispiel 1.1., 40 ml Essigester, 25 ml Acetanhydrid und 3,05 g (31,05 mMol) Kaliumacetat werden unter Rühren mit 2,0 g (31,05 mMol) Zinkpulver versetzt. Nach 40 Min. Rühren bei 25°C wird das Gemisch abfiltriert und der Rückstand viermal mit $CH_2Cl_2$ gewaschen. Die Filtrate werden eingedampft und der Rückstand aus $CH_2Cl_2$/Pentan, dann aus Toluol umkristallisiert. Ausbeute 4,1 g (84 %), Smp. 107-111°C.

1.3. Herstellung des Endproduktes 1

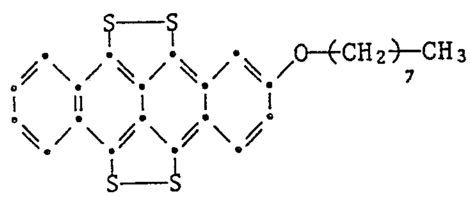

(1)

In einem 250 ml Kolben mit Rückflusskühler und Gaseinleitungsrohr werden unter leichtem Argonfluss 846 mg (183 mMol) des Diacetats aus Beispiel 1.2., 507 mg (15,8 mVal) $S_8$ und 5 mg (0,026 mMol) p-Toluolsulfonsäure in 100 ml 1,2,4-Trichlorbenzol 5 1/2 Stunden refluxiert. Danach wird die dunkelgrüne Lösung am Hochvakuum eingedampft.

Das Rohprodukt (1,35 g) wird über eine Kieselgelflashssäule (240 g Kieselgel, Ø 7 cm) mit $CCl_4$ chromatographiert. Das Kieselgel muss zuvor mit $CCl_4$/2 % Triethylamin behandelt und darauf mit reinem $CCl_4$ gewaschen werden, bis das Eluat wieder neutral ist. Die dunkelgrün gefärbten Fraktionen enthalten das gereinigte 2-n-Octyloxy-5,6,11,12-tetrathiotetracen. Die Ausbeute beträgt 560 mg (65 %).
$\lambda_{max}$ (1,2,4-Trichlorbenzol): 698, 640, 472 nm;
Massenspektrum M+ = 480 m/e; die Fragmentierung steht mit der Struktur im Einklang.

Beispiel 2: Herstellung des substituierten Dibenzotetraazaannulenderivats 2

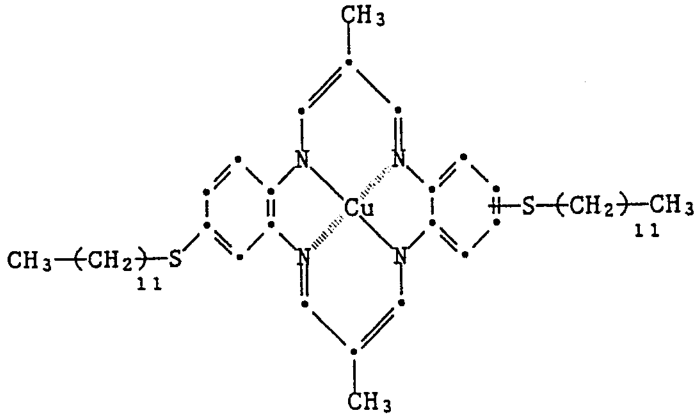

(2).

Bei 60° C wird 1 g Kupferacetat in 25 ml Dimethylformamid gelöst und die Lösung mit Stickstoff gesättigt. Zu dieser Lösung gibt man 3,08 g 4-Dodecylthio-1,2-phenylendiamin und erhitzt unter Rühren auf 100° C. Bei dieser Temperatur tropft man anschliessend eine Lösung von 1,15 g 3-Ethoxy-2-methylacrolein in 5 ml Dimethylformamid langsam zu. Es bildet sich eine dunkelbraune Suspension, die man noch 22 Std. bei 120° C weiterrührt. Nach Abkühlung auf 0° C wird das braune Produkt abfiltriert, mit Ethanol und Wasser gewaschen und bei 40° C im Vakuum getrocknet. Ausbeute: 2,3 g (ca. 60 %).
Zur Reinigung des Produktes wird zweimal aus Dimethylformamid umkristallisiert.

Elementaranalyse:

| | | | | | |
|---|---|---|---|---|---|
| Berechnet: | C 67,87 | H 8,54 | N 7,20 | S 8,32 | Cu 8,16 %; |
| Gefunden: | C 67,89 | H 8,64 | N 7,40 | S 7,88 | Cu 8,34 %. |

VIS-Spektrum ($CHCl_3$) 420 (sh), 440, 470 (sh), 499 nm.Massenspektrum: Cluster bei 778, 609 ($-C_{12}H_{25}$), 577 ($-SC_{12}H_{25}$).

Beispiel 3: Herstellung von 2-Trifluormethyl-5,6,11,12-tetrathiotetracen (3)

3.1. Herstellung des Zwischenproduktes 6-(Trifluormethyl)-1,4-naphthochinon

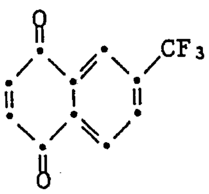

1,64 g (0,01 mMol) 5-Trifluormethyl-2-oxo-2H-pyran, 5,4 g (0,05 Mol) 1,4-Benzochinon in 7 ml 1,2-Dichlorbenzol werden 12 Std. auf 180° C erhitzt. Das Reaktionsgemisch wird dann bei 90°/20 mbar eingedampft und der Destillationsrest über 150 g Kieselgel 60 chromatographiert (Laufmittel $CH_2Cl_2$:Aceton 19:1; 0,3 bar Ueberdruck), Ausbeute 1,82 g (80,52 %); Smp. 80-5° C.

3.2. Herstellung des Zwischenproduktes 2-Trifluormethyl-tetracen5,12-dion

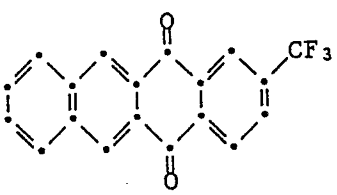

5,65 g (25 mMol) 6-(Trifluormethyl)-1,4-naphthochinon, 9,82 g (ca. 37 mMol) 1,2-Dibrombenzocyclobuten

(verunreinigt mit etwas 2-Brom-1-iodbenzocyclobuten) und 100 ml Xylol werden während 16 Std. mit Wasserabscheider am Rückfluss gehalten. Das Gemisch wird abgekühlt, der Niederschlag abfiltriert und mit Xylol gewaschen. Die Ausbeute beträgt 5,82 g (71 %); Smp. 253-4°C.

Elementaranalyse für $C_{19}H_9F_3O_2$ (MG 326,27)

| | | | |
|---|---|---|---|
| Berechnet: | C 69,95 | H 2,78 | F 17,47 %; |
| Gefunden; | C 69,84 | H 3,05 | F 17,38 %. |

3.3. Herstellung des Zwischenproduktes 2-Trifluormethyl-5,12-bis(acetoxy)-tetracen

Man arbeitet wie unter 1.2. beschrieben und setzt anstelle des 2-n-Octyloxytetracen-5,12-dions das 2-Trifluormethyl-tetracen-5,12-dion ein. Nach dem Aufarbeiten gemäss Beispiel 1.2. erhält man das gewünschte Produkt in einer Ausbeute von 91 % d.Th. (Smp. 285-8°C).

3.4. Herstellung des Endproduktes 3

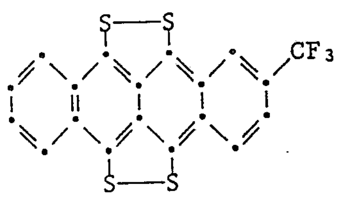

(3)

In einem 100 ml Kölbchen mit Rückflusskühler und Gaseinleitungsrohr werden unter leichtem Argonfluss 251 mg (0,61 mMol) Diacetat aus 3.3, 78 mg (2,43 mVal) $S_8$ und 2 mg (0,01 mMol) p-Toluol-sulfonsäure in 35 ml 1,2,4-Trichlorbenzol 20 Std. refluxiert.

Nach Abkühlen wird am Hochvakuum das Lösungsmittel abgedampft, der Rückstand mit Hexan ausgekocht, das schwarze Pulver abfiltriert und am Hochvakuum bei 60°C getrocknet. Die Ausbeute beträgt 203 mg (79 %) Rohprodukt.

Dieses wird bei 190°C ($10^{-2}$ Pa) sublimiert, wodurch 67,5 mg (25,6 %) reines 2-Trifluormethyl-5,6,11,12-tetrathiotetracen erhalten werden (schwarze Nädelchen).

Massenspektrum: M+ = 420; Fragmentierung steht im Einklang mit der erwarteten Struktur.

$\lambda_{max}$ (1,2,4-Trichlorbenzol): 725, 665, 484 nm.

B) Anwendungsbeispiele

Formeln der verwendeten Verbindungen

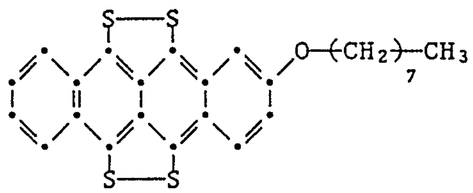

(1)

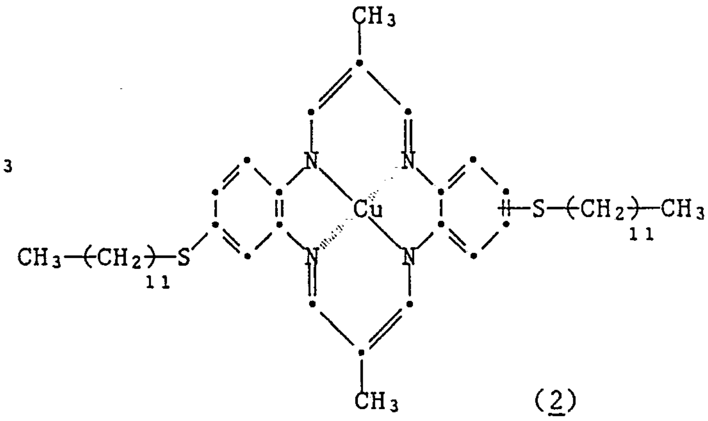

(2)

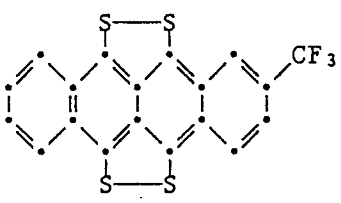

(3)

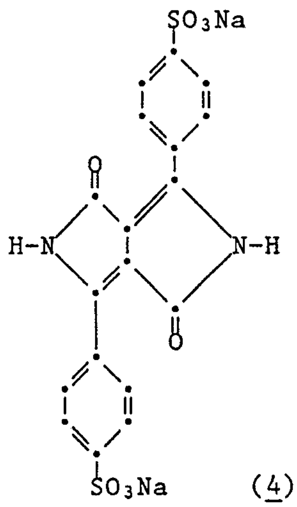

(4)

Die Herstellung dieser Verbindung ist in der EP-A-224,445 beschrieben.

Beispiel I: Simultane elektrochemische Oxidation und Uebertragung von Monoschichten aus 2-n-Octyloxy-5,6,11,12-tetrathiotetracen 1 und Methylarachidat auf stromdurchflossene Substrate (Leitsalz in der Subphase: $LiClO_4$)

Man stellt eine Lösung von 1 in Chloroform her (ca. 0,5 mg/ml) und mischt sie mit einer Lösung von Methylarachidat (MA; Fluka puriss.) in Chloroform (ca. 1 mg/ml), so dass eine Mischlösung 1:MA von 70:30 (Mol %) entsteht. Diese Lösung wird auf der Wasseroberfäche eines Langmuir-Troges bei konstanter Temperatur (T = 15° C) gespreitet. Es wird ein kommerzieller Langmuir-Trog verwendet (MGW Lauda; Grösse 70 x 15 x 0,6 cm; präpara tive Ausführung). Als Subphase dient eine $10^{-3}$ molare Lösung von $LiClO_4$ (Fluka purum p.a.) in entionisiertem Wasser. Dieses Wasser wird durch Reinigung mit einer "Milli-Q-Anlage" (Millipore Corp.) gereinigt (spez. Widerstand des Wassers $\rho > 18\ M\Omega$ x cm). Die eingesetzten Lösungsmittel sind von spektroskopischer Qualität.

Nach dem Spreiten bildet sich ein monomolekularer Film, den man mit einer Geschwindigkeit von ca. 1,25 cm/min. komprimiert, bis ein Filmdruck von $\pi$ = 20 mN/m erreicht ist. Bei konstantem Druck wartet man, bis keine Flächenabnahme mehr zu verzeichnen ist. Anschliessend wird der Film nach der Langmuir-Blodgett Technik auf ITO-Glasplättchen übertragen. Die Glasplättchen sind auf einer Seite mit Indium-Zinn-Oxid (ITO) beschichtet; Hersteller: Fa. Balzers, Liechtenstein; zur Reinigung werden die ITO-Glasplättchen (11 x 18 x 1 mm) in Chloroform mit Ultraschall behandelt. Dabei darf sich das Lösungsmittel nicht wesentlich erwärmen, da sonst die IT0-Schicht zuerstört wird. Beim Uebertragen wird während des Ein- und Austauchens eine elektrische Spannung (0,5 bis 5 V) an das Plättchen angelegt. Zur Uebertragung der Monoschicht wird ein Filmlift FL-1 (MGW-Lauda) benutzt, die Tauchgeschwindigkeit beträgt 2-3 cm/min. Die aufgezogenen Multischichten besitzen eine Dicke von 15-51 Schichten und Y-Orientierung. Als Gegenelektrode bei der Uebertragung dient ein Golddraht, der im Abstand von 2 cm vom Substrat in die Subphase eintaucht. Das Substrat wird als Anode geschaltet. Als Gleichstromquelle dient ein Netzgerät der Fa. Kikusui (Modell PAB 18-1A). Durch Ein- und Austauchen des Substrats werden die Monoschichten auf der stromdurchflossenen Seite (ITO-Seite) in oxidierter Form übertragen. Zum Nachweis der eingetretenen Oxidation wird die Multischicht auf der nichtleitenden Rückseite des Substrats abgewischt und die Multischicht auf der ITO-Seite UV/VIS-spektroskopisch vermessen. Die Daten sind in Tab. 1 aufgelistet. Sie zeigen, dass bei Spannungen bis 0,5 V 1 vorwiegend als Radikalkation und bei Spannungen über 0,5 V als Dikation übertragen wird.

Beispiel II: Simultane elektrochemische Oxidation und Uebertragung von Monoschichten aus 1 und Methylarachidat auf stromdurchflossene Substrate (Leitsalz in der Subphase: $KPF_6$)

Es wird wie in Beispiel I beschrieben verfahren. Anstelle von $LiClO_4$ wird eine $10^{-3}$ molare Lösung von $KPF_6$ in "Millipore" Wasser als Subphase verwendet. Es werden 31 Monoschichten bei einer Spannung von 0,5 bzw. 1,5 V auf ITO-Glasplättchen übertragen. Zum Nachweis der eingetretenen Oxidation wird die Multischicht auf der nichtleitenden Rückseite des Substrats abgewischt und die Multischicht auf der ITO-Seite UV/VIS-spektroskopisch vermessen. Die Daten sind in Tab. 1 aufgelistet. Die Absorptionsmaxima zeigen, dass bei kleiner Spannung (ca. 0,5 V) das Radikalkationensalz von 1 und bei hoher Spannung (ca. 1,5 V) das Dikationensalz übertragen wird.

Beispiel III: Simultane elektrochemische Oxidation und Uebertragung von Monoschichten aus 1 und Methylarachidat auf stromdurchflossene Substrate (Leitsalz in der Subphase: Natriumdodecylsulfat)

Es wird wie in Beispiel I beschrieben verfahren. Anstelle von $LiClO_4$ wird eine $10^{-3}$ molare Lösung von Natriumdodecylsulfat (Merck; "für biochemische Zwecke und Tensiduntersuchungen") in "Millipore" Wasser (pH = 5,95) verwendet. Nach dem Komprimieren der Monoschicht auf einen Filmdruck von 20 mN/m wird hier stets eine nachträgliche, starke Expansion der Monoschicht beobachtet. Dies ist wahrscheinlich auf des Eindringen von Dodecylsulfatanionen in den Film zurückzuführen.

Nach beendeter Expansion werden 31 Monoschichten bei einer Spannung von 0,5 bzw. 1,5 V auf ITO-Glasplättchen übertragen. Zum Nachweis der eingetretenen Oxidation wird die Multischicht auf der nichtleitenden Rückseite des Substrats abgewischt und die Multischicht auf der ITO-Seite UV/VIS-spektroskopisch vermessen. Die Daten sind in Tab. 1 aufgelistet. Die Absorptionsmaxima zeigen, dass bei kleiner Spannung ($\leqq$ 0,5 V) das Radikalkationensalz von 1 und bei hoher Spannung (1,5 V) das Dikationensalz übertagen wird.

Beispiel IV: Simultane elektrochemische Oxidation und Uebertragung von Monoschichten aus 1 und Methylarachidat auf stromdurchflossene Substrate (Leitsalz in der Subphase: Dinatriumdiketopyrrolopyrroldisulfonat 4)

Es wird wie in Beispiel I beschrieben verfahren. Anstelle von $LiClO_4$ wird eine $10^{-4}$ molare Lösung von 4 in "Millipore" Wasser verwendet (pH = 5,85). Es werden 31 Monoschichten bei einer elektrischen Spannung von 1,5 V auf ITO-Glasplättchen aufgezogen.

Zum Nachweis der eingetretenen Oxidation wird die Multischicht auf der nichtleitenden Rückseite des Substrats abgewischt und die Multischicht auf der ITO-Seite UV/VIS-spektroskopisch vermessen. Die Daten sind in Tab. 1 aufgelistet. Sie zeigen, dass 1 in Form des Dikationensalzes übertragen wird und das Diketopyrrolopyrrolsulfonatdianion als Gegenion in die Multischicht eingebaut wird.

Beispiel V: Simultane elektrochemische Oxidation und Uebertragung von Monoschichten aus 1 auf stromdurchflossene Substrate (Leitsalz in der Subphase: Natriumdodecylsulfat)

Man verfährt wie in Beispiel III. In Abänderung wird jedoch eine Monoschicht aus reinem 1 verwendet, die analog Beispiel I hergestellt wird.

Es werden 31 Monoschichten bei einer elektrischen Spannung von 1,5 V aufgezogen. Bei der simultanen Uebertragung und Oxidation werden die Alkylsulfat-Gegenionen in die Schichten aus 1 eingebaut.

Zum Nachweis der eingetretenen Oxidation wird die Multischicht auf der nichtleitenden Rückseite des Substrats abgewischt und die Multischicht auf der ITO-Seite UV/VIS-spektroskopisch vermessen. Das Absorptionsmaximum bei $\lambda_{max.}$ = 485 nm ($\varepsilon$ = 35100 $cm^{-1}$) zeigt, dass 1 überwiegend als Dikation übertragen worden ist.

Beispiel VI: Simultane elektrochemische Oxidation und Uebertragung von Monoschichten aus 2 auf stromdurchflossene Substrate (Leitsalz in der Subphase: $LiClO_4$).

Es wird wie in Beispiel I beschrieben verfahren. In Abänderung wird jedoch eine Monoschicht aus 2 und Methylarachidat (Mischungsverhältnis 70:30 Molprozent) verwendet, die analog Beispiel I hergestellt wird. Während der Filmübertragung wird eine Spannung von 1,5 V an das ITO-Glasplättchen angelegt. Es werden 31 Schichten übertragen.

Zum Nachweis der eingetretenen Oxidation wird die Multischicht auf der nichtleitenden Rückseite des Substrats abgewischt und die Multischicht auf der ITO-Seite UV/VIS-spektroskopisch vermessen. Das Absorptionsmaximum bei $\lambda_{max}$ = 380 nm ($\varepsilon$ = 60500 $cm^{-1}$) zeigt, dass die Moleküle 2 in oxidierter Form übertragen worden sind.

Beispiel VII: Simultane elektrochemische Oxidation und Uebertragung von Monoschichten aus 3 auf stromdurchflossene Substrate (Leitsalz in der Subphase: Natriumdodecylsulfat)

Man verfährt wie in Beispiel III. In Abänderung wird jedoch eine Monoschicht aus reinem 3 verwendet, die analog Beispiel I hergestellt wird.

Es werden 31 Monoschichten bei einer elektrischen Spannung von 1,5 V auf ITO-Glasplättchen aufgezogen. Bei der simultanen Uebertragung und Oxidation werden die Alkylsulfat-Gegenionen in die Schichten aus 3 eingebaut. Zum Nachweis der eingetretenen Oxidation wird die Multischicht auf der nichtleitenden Rückseite des Substrats abgewischt und die Multischicht auf der ITO-Seite UV/VIS-spektroskopisch vermessen. Die

Absorptionsmaxima bei $\lambda_{max.}$ = 500 nm ($\varepsilon$ = 41700 $cm^{-1}$) und 460 nm ($\varepsilon$ = 52700 $cm^{-1}$) zeigen, dass 3 überwiegend als Dikation übertragen worden ist.

Tabelle 1

Charakteristische Daten der nach Beispielen I-IV hergestellten Multischichten

| Multischicht aus Beispiel | Spannung [V] | Zahl der übertragenen Schichten | $d_{001}$-Wert* [nm] | $\lambda_{max}$ [nm] | ($\varepsilon$)** ([$cm^{-1}$]) |
|---|---|---|---|---|---|
| I | 0,5 | 51 | 3,95 | 570 | (16'500) |
| I | 1,0 | 15 | | 550 | (13'300) |
| | | | | ~ 470 sh | |
| I | 2,0 | 51 | 3,92*** | 550 | (15'700) |
| | | | | ~ 470 sh | |
| I | 3,0 | 15 | | 550 | (14'000) |
| | | | | ~ 470 sh | |
| I | 5,0 | 15 | | 550 | ( 9'500) |
| | | | | ~ 470 sh | |
| II | 0,5 | 31 | | 590 | ( 9'500) |
| II | 1,5 | 31 | | 550 | ( 8'600) |
| | | | | 470 | ( 8'100) |
| III | 0,1 | 31 | | 570 | ( 6'200) |
| III | 0,5 | 31 | | 560 | ( 4'600) |
| | | | | 485 | ( 4'400) |
| III | 1,5 | 31 | | 560 sh | |
| | | | | 485 | (20'200) |
| IV | 1,5 | 31 | | 530 | ( 9'100) |
| | | | | 490 | ( 7'700) |

*Röntgenographisch ermittelter Doppelschichtabstand. Es werden bis zu 5 Reflexordnungen beobachtet.
**$\varepsilon$ ist auf Basis eines Doppelschichtabstands von 3,95 nm berechnet
***Die Proben sind inhomogen. Es werden noch weitere Schichtabstände von 5,96 und 4,89 nm gemessen.

## Patentansprüche

1. Verfahren zur Herstellung von Langmuir-Blodgett Schichtsystemen (LB-Systemen) umfassend die Schritte

i) Herstellung einer monomolekularen Schicht aus einer elektroaktiven Verbindung enthaltend ein cyclisches konjugiertes $\pi$-System, das sich elektrochemisch oxidieren oder reduzieren lässt oder aus einem Gemisch dieser Verbindung in Kombination mit weiteren zur Stabilisierung von monomolekularen Schichten befähigten amphiphilen Verbindu

ii) Uebertragung dieser Schicht von einer Subphase, die einen Elektrolyten enthält und in die eine Gegenelektrode eintaucht, auf einen festen Träger mit elektrisch leitfähiger Oberfläche durch Tauchen besagten Trägers durch die Schicht, wobei die Uebertragung der Schicht auf den als Anode oder als Kathode geschalteten Träger erfolgt, und wobei das angelegte Potential so gewählt wird, dass sich ein Salz aus besagter Verbindung und Gegenionen der Subphase bildet.

2. Verfahren gemäss Anspruch 1, worin die elektroaktive Verbindung in der oxidierten Form als Radikalkation oder Dikation und in der reduzierten Form in neutraler Form vorliegt.

3. Verfahren gemäss Anspruch 2, worin die elektroaktive Verbindung eine Verbindung der Formel I ist

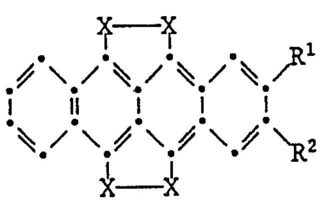

(I),

worin X S oder Se ist, $R^1$ $C_1$-$C_{30}$-Alkyl, $-CF_3$, $-O-R^3$, $-S-R^3$ oder $-CO-O-R^3$ bedeutet, $R^2$ Wasserstoff, $C_1$-$C_{30}$-Alkyl, $-CF_3$, $-O-R^3$, $-S-R^3$ oder $-CO-O-R^3$ ist, und $R^3$ $C_1$-$C_{30}$-Alkyl oder $C_1$-$C_{30}$-Teil- oder Perfluoralkyl ist.

4. Verfahren gemäss Anspruch 3, worin X S ist, $R^1$ $-O-R^3$ ist und $R^2$ Wasserstoff bedeutet; oder worin X S ist, $R^1$ $-CF_3$ bedeutet und $R^2$ Wasserstoff ist.

5. Verfahren gemäss Anspruch 2, worin die elektroaktive Verbindung eine Verbindung der Formel II ist

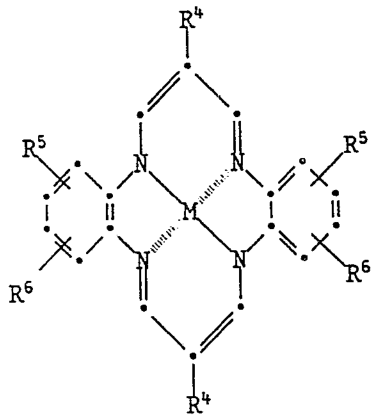

(II),

worin $R^4$ Wasserstoff, $C_1$-$C_{30}$-Alkyl, unsubstituiertes oder durch $C_1$-$C_{12}$-Alkyl, $C_1$-$C_{12}$-Alkoxy oder $C_1$-$C_{12}$-Alkylthio substituiertes Phenyl oder Naphthyl ist, $R^5$ $C_4$-$C_{30}$-Alkyl, $C_4$-$C_{30}$-Alkoxy oder $C_4$-$C_{30}$-Alkylthio bedeuten, $R^6$ Wasserstoff darstellt oder die gleiche Bedeutung wie $R^5$ aufweist und M für ein zweiwertiges Metallatom aus der Gruppe Kupfer, Nickel, Eisen, Kobalt, Palladium und Platin oder für zwei Wasserstoffatome steht.

6. Verfahren gemäss Anspruch 5, worin M Kupfer oder Nickel ist, $R^4$ $C_1$-$C_{30}$-Alkyl bedeutet, $R^5$ $C_{10}$-$C_{30}$-Alkylthio ist und $R^6$ Wasserstoff bedeutet.

7. Verwendung der nach dem Verfahren gemäss Anspruch 1 erhältlichen Schichtsysteme als elektrochrome Anzeigen oder als Sensoren.